# EUROPÄISCHE PATENTSCHRIFT

(11) **EP 0 854 451 B1**
(45) Veröffentlichungstag und Bekanntmachung des Hinweises auf die Patenterteilung: **16.04.2003**
(21) Anmeldenummer: 97120819.4
(22) Anmeldetag: 27.11.1997
(51) Int. Cl.: G07D 7/00

(54) **Wertdokument**
Security document
Document de valeur

(30) Priorität: 02.12.1996 DE 19649874
(43) Veröffentlichungstag der Anmeldung: 22.07.1998
(73) Patentinhaber: Giesecke & Devrient GmbH, 81677 München (DE)
(72) Erfinder: Straub, Walter, 82041 Oberhaching (DE)
(74) Vertreter: Höhfeld, Jochen

(56) Entgegenhaltungen:
- EP-A- 0 268 450
- WO-A-89/00319
- WO-A-94/06102
- DE-A- 2 458 705
- US-A- 4 982 073

## Beschreibung

Die Erfindung betrifft ein Wertdokument, wie Scheck oder Ausweiskarte oder dergleichen, mit Informationen, die für das Dokument spezifisch sind, insbesondere benutzerbezogenen Daten, sowie ein Verfahren zur Echtheitsprüfung des Wertdokuments.

Angesichts der modernen Reproduktionstechniken, insbesondere der steigenden Qualität von Farbkopierern, wird es immer einfacher, Wertdokumente mit verhältnismäßig geringem Aufwand zu reproduzieren. Damit steigt die Gefahr von Fälschungen.

Um dieser Entwicklung entgegenzuwirken, wurde bereits vorgeschlagen, Wertpapiere durch eine besondere Codierung abzusichern (DE 24 58 705 A1). Hierbei werden individuelle Kenngrößen des Dokuments, wie z.B. charakteristische Farb- oder Druckeigenschaften, gemessen und in codierter Form auf dem Dokument abgelegt. Für den Fall, daß die Codierung für das Auge nicht sichtbar sein soll, können lumineszierende Druckfarben verwendet werden, die im visuellen Spektralbereich transparent sind. Bei der Überprüfung der Echtheit des Dokuments werden die charakteristischen Kenngrößen gemessen und mit den in codierter Form auf dem Dokument gespeicherten Meßdaten verglichen.

Diese Vorgehensweise bietet einen guten Fälschungsschutz, solange die Codierung der Wertdokumente zentral in gesicherter Umgebung und unter Verwendung von im Handel praktisch nicht erhältlichen Lumineszenzstoffen erfolgt.

Bei Scheckformularen, die benutzerbezogene Informationen, wie die Kontonummer, aufweisen, ist es häufig auch sinnvoll, diese Daten in die Codierung mit einzubeziehen, um sicherzustellen, daß diese Daten nicht manipuliert wurden. Schecks werden allerdings meist dezentral personalisiert, d.h. die Blankoformulare werden zentral hergestellt und anschließend an die ausgebende Bank weitergeleitet, welche die benutzerbezogenen Daten aufbringt. Um das aus der DE 24 58 705 A1 bekannte Verfahren auf die benutzerbezogenen Daten des Schecks anwenden zu können, müßte daher jede Bank mit dem entsprechenden Equipment für die Aufbringung der Codierung und insbesondere den entsprechenden Lumineszenzstoffen ausgerüstet werden. Auf diese Weise geht jedoch ein Teil des Fälschungschutzeffekts verloren, da das für die Codierung benötigte Equipment wesentlich leichter zugänglich wird und damit die Gefahr von Mißbrauch steigt.

Im Zusammenhang mit Schecks ist aus der WO 94/06102 bekannt, diejenigen Felder, die handschriftlich oder per Schreibmaschine bei der Ausstellung des Schecks vom Verwender persönlich ausgefüllt werden, zur Kontrasterhöhung mit einem lumineszierenden Hintergrund zu versehen. Denn die Schrift ist häufig für eine automatische, maschinelle Auswertung nicht ausreichend kontrastierend. Als Nebeneffekt wird auch die Fälschungssicherheit erhöht.

Aufgabe der vorliegenden Erfindung ist es, eine Lösung vorzuschlagen, wie eine Codierung ohne Sicherheitsrisiken im Umgang mit Lumineszenzstoffen von Banknoteninstituten eigenständig erzeugt werden kann, damit diese in der Lage sind, benutzerbezogene Informationen in codierter Form beispielsweise auf Scheckformulare aufzubringen.

Der Erfindung liegt daher die Aufgabe zugrunde, ein Wertdokument vorzuschlagen, welches die Nachteile des Standes der Technik vermeidet.

Diese Aufgabe wird durch die Merkmale der unabhängigen Ansprüche gelöst. Weiterbildungen sind Gegenstand der Unteransprüche.

Das erfindungsgemäße Wertpapier weist in einem bestimmten Bereich einen lumineszierenden Untergrund auf, der partiell durch einen farblich kontrastierenden Stoff, z.B. eine nichtlumineszierende Druckfarbe, abgedeckt ist. Die Gestalt und Anordnung der Abdeckung ergeben eine Codierung, die mit für das Dokument spezifischen Daten korreliert ist.

Beim Lesen der Codierung wird das Dokument mit Anregungsstrahlung des Lumineszenzstoffes beleuchtet. Ein Detektor, der lediglich im Spektralbereich der Lumineszenzstrahlung empfindlich ist, wird nur die lumineszierenden Bereiche als "helle" Bereiche erkennen. Der übrige Teil des Dokuments sowie die Abdeckung in dem lumineszierenden Bereich erscheinen für den Sensor dunkel, sofern die Abdeckung im Wellenlängenbereich der Lumineszenzstrahlung nicht oder nur geringfügig reflektiert oder emittiert. Auf diese Weise wird ein starker Kontrast zwischen Untergrund und Abdeckung erzeugt, der eine einfache Lesbarkeit der Codierung ermöglicht.

Gleichzeitig weist das erfindungsgemäße Dokument den entscheidenden Vorteil auf, daß der lumineszierende Untergrund für alle Wertdokumente gleich gestaltet und damit von dem Codier- bzw. Personalisierungsvorgang entkoppelt werden kann. So ist es möglich, den lumineszierenden Untergrund zentral in gesicherter Umgebung aufzubringen, während das Aufbringen der Abdeckung in Form einer Codierung zu einem späteren Zeitpunkt, z.B. bei der Personalisierung des Wertdokuments, erfolgen kann. Für die Abdeckung können hierbei konventionelle Druckfarben verwendet werden.

Der Untergrund dagegen wird vorzugsweise unter Verwendung spezieller Lumineszenzstoffe aufgebracht, die im Handel praktisch nicht erhältlich sind. Dies hat den zusätzlichen Vorteil, daß bei der Überprüfung des Elements in einem ersten Schritt anhand einer oder mehrerer meßbarer, charakteristischer Eigenschaften des Lumineszenzstoffs festgestellt werden kann, ob es sich um einen "echten" Lumineszenzstoff handelt.

Gemäß einer bevorzugten Ausführungsform weist das Wertdokument einen lumineszierenden Untergrundstreifen auf, der an einer geeigneten Stelle des Dokuments aufgebracht wird. In den lumineszierenden Streifen wird unter Einsatz eines konventionellen Druckverfahrens, z.B. mittels eines Laserdrukkers, Nadeldruckers oder mit Offset-Druckmaschinen die codierte Information in Form eines Strichcodes aufgedruckt, die vorzugsweise Anteile der benutzerbezogenen Daten enthält.

Der Fälschungsschutz kann schließlich noch weiter erhöht werden, wenn der lumineszierende Untergrund nicht als vollflächige Beschichtung sondern in Form von kleinen, visuell oder maschinell jedoch noch auflösbaren, geometrischen Strukturen aufgebracht wird. Auf diese Weise können etwaige Manipulationsversuche im Bereich des Untergrunds besser erkannt werden. Bei einem Versuch, mit chemischen Mitteln die Abdeckung zu verändern, verwischen die Strukturen. Handelt es sich beispielsweise um einen im visuellen Spektralbereich emittierenden Lumineszenzstoff, können diese Änderungen bei Anregung des Stoffes sehr leicht erkannt werden, so daß es auch ohne maschinelle Überprüfung der Korrespondenz zwischen Code und gelesener Information möglich ist, Manipulationen aufzudecken.

Gemäß einer weiteren erfindungsgemäßen Ausführungsform kann das Dokument zusätzlich mit einer magnetischen Information versehen werden, die mit der codierten Information im Bereich des lumineszierenden Untergrunds korreliert ist. Im einfachsten Fall wird die auf beide Arten darzustellende Grundinformation einmal verschlüsselt und lediglich auf unterschiedliche Darstellungsweisen - einmal mittels magnetischen Materials und einmal durch Abdecken eines lumineszierenden Untergrunds - auf dem Wertdokument abgelegt. Gemäß einer Variante können für die unterschiedlichen Darstellungsformen des Codes auch unterschiedliche Verschlüsselungsalgorithmen verwendet werden. Denkbar wäre auch, daß der Magnetcode und der über den Lumineszenzstoff dargestellte Code unterschiedliche Informationen darstellen, die sich ergänzen oder in einer bestimmten Beziehung zueinander stehen.

Bei der Echtheitsprüfung des Dokuments werden beide codierten Informationen gelesen und auf Übereinstimmung bzw. hinsichtlich der vorbestimmten Beziehung zueinander überprüft. Aufgrund des besonderen Prüfverfahrens für den mit Hilfe des lumineszierenden Untergrunds dargestellten Codes kann gleichzeitig festgestellt werden, ob im lumineszierenden Bereich oder an der magnetischen Information Manipulationen vorgenommen wurden.

Denn beim Lesen der codierten Information im Bereich des lumineszierenden Untergrunds wird vom Detektor quasi gleichzeitig die aufgedruckte Codierung, d.h. die Abdeckung selbst, erkannt und das Signal des lumineszierenden Untergrunds aufgezeichnet. Im Bereich der Codierung, d.h. der Abdeckung des lumineszierenden Untergrunds, ist dieses Signal sehr klein bzw. nahezu null. Folglich besteht eine direkte Korrelation zwischen den beiden vom Detektor gemessenen Signalkurven, die lediglich im Falle von Manipulationen entfällt.

Weitere Ausführungsbeispiele und Vorteile der Erfindung werden anhand der Figuren erläutert.

Es zeigen:
- Fig. 1: Skizze eines erfindungsgemäßen Wertdokuments,
- Fig. 2: Variante des erfindungsgemäßen Wertdokuments.

Die Figur zeigt ein erfindungsgemäßes Wertdokument 1, wie z.B. einen Scheck, eine Ausweiskarte, einen Fahrausweis, ein Ticket oder dergleichen. Dieses Wertdokument 1 weist allgemeine Daten 2 auf, die auf jedem der Dokumente vorhanden sind, wie z.B. Angaben bezüglich der ausgebenden Institution oder einen Untergrunddruck. Zusätzlich sind auf dem Wertdokument 1 auch das Dokument individualisierende Daten 3 vorgesehen. Hierbei kann es sich beispielsweise um eine separat aufgebrachte Information, wie z.B. die Kontonummer eines Scheckbenutzers handeln. Denkbar sind allerdings auch andere individualisierende Informationen, die in dem Dokument inhärent enthalten sind, wie beispielsweise bestimmte charakteristische Druck- oder Farbeigenschaften. Erfindungsgemäß weist das Dokument 1 schließlich einen lumineszierenden Bereich 4 auf, welcher hier in Form eines Streifens gezeigt wird. Der Bereich 4 kann jedoch auch jede beliebige andere Umrißform aufweisen oder auch aus mehreren voneinander getrennten, lumineszierenden Bereichen bestehen. Der lumineszierende Bereich 4 wird partiell mittels einer Schicht 5 abgedeckt, welche im Wellenlängenbereich der Lumineszenzstrahlung des Streifens 4 nicht oder nur geringfügig reflektiert oder emittiert. Die Abstände bzw. die Form der Abdeckung 5 stellen eine Codierung dar, welche mit den individualisierenden Daten 3 des Dokuments 1 korreliert ist. Die Abdeckung 5 kann hierbei in Form eines Strichcodes, aber auch in Form anderer geometrischer Strukturen, die in voneinander beabstandeten Bereichen angeordnet sind, aufgebracht werden.

Die Herstellung eines derartigen Dokuments erfolgt vorzugsweise in zwei Stufen. In einem ersten Schritt wird ein Rohling hergestellt, beispielsweise ein Scheckformular, welches die allgemeinen Daten 2 trägt. Diese Herstellung erfolgt vorzugweise zentral, bei Schecks beispielsweise in einer Papierfabrik. Während oder direkt anschließend an diesen Herstellungsprozeß wird der lumineszierende Bereich 4 auf dem Dokument erzeugt, indem ein Lumineszenzstoff auf das Dokumentenmaterial aufgebracht wird. Dies kann durch Beschichten oder Aufdrucken des Lumineszenzstoffes erfolgen. Als Lumineszenzstoffe kommen grundsätzlich alle lumineszierenden Stoffe in Frage, bevorzugt werden jedoch Stoffe, die im visuellen Spektralbereich transparent sind und im visuellen oder unsichtbaren Spektralbereich lumineszieren.

Die so hergestellten Dokumentenrohlinge werden in einem zweiten Schritt mit den individualisierenden Daten bzw. der Codierung versehen. Bei Scheckformularen beispielsweise erfolgt dieser Personalisierungsschritt bei den jeweiligen ausgebenden Banken. Hier werden die individualisierenden Daten 3 aufgedruckt. Gleichzeitig wird zumindest ein Teil dieser benutzerbezogenen Daten verschlüsselt und in Form des Codes 5 in den lumineszierenden Bereich 4 aufgebracht. Vorzugsweise erfolgt das Aufdrucken des Codes 5 mittels eines konventionellen Laserdruckers.

Um den Druckvorgang des lumineszierenden Bereiches 4 zu erleichtern, können der Druckfarbe auch im visuellen Spektralbereich fluoreszierende Stoffe beigemischt werden, die ein schnelles visuelles Prüfen des Druckvorgangs erlauben. Auf diese Weise kann problemlos festgestellt werden, ob die Druckwerke richtig arbeiten.

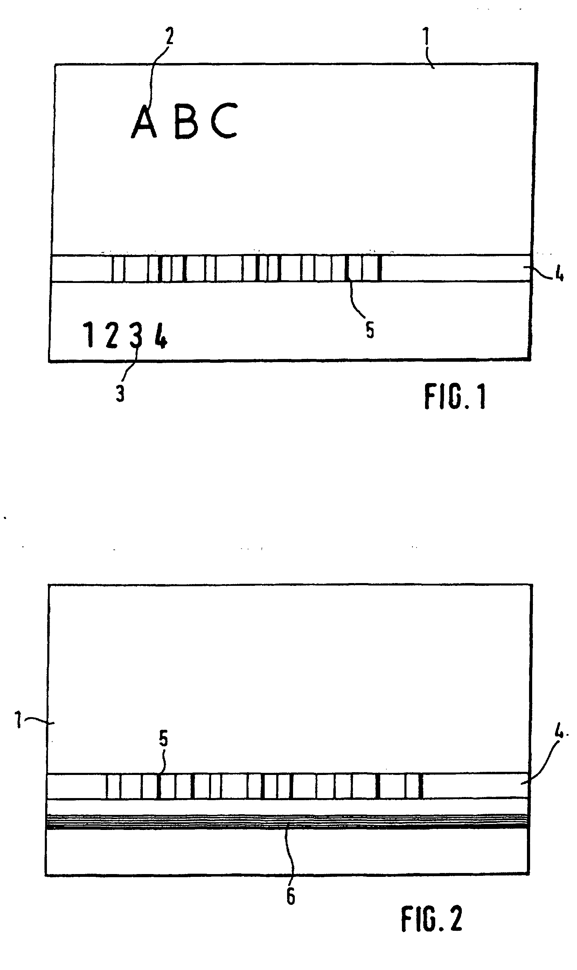

Fig. 2 zeigt eine Variante des erfindungsgemäßen Wertdokuments 1. Dieses Dokuments weist ebenfalls einen lumineszierenden Bereich 4 auf, der partiell mittels einer Schicht 5 abgedeckt ist, die im Wellenlängenbereich der Lumineszenzstrahlung des Streifens 4 nicht oder nur geringfügig reflektiert oder emittiert. Das Wertdokument 1 weist ferner eine magnetische Spur 6 auf, in welcher ebenfalls codierte Informationen gespeichert sind. Die durch die Abdeckung 5 dargestellte Information und die in der Magnetschicht 6 gespeicherte Information sind miteinander korreliert. Diese Korrelation kann auf unterschiedlichste Weisen entstehen. So ist es denkbar, wie bereits im Zusammenhang mit Fig. 1 erläutert, bestimmte individualisierende Daten zu verschlüsseln und diesen Code einmal in Form einer Abdeckung 5 auf dem lumineszierenden Untergrund 4 auf dem Wertdokument 1 abzulegen und einmal ebenfalls in codierter Form im Magnetstreifen 6 zu speichern. Für die Codierung der individualisierenden Daten kann hierbei jeweils der gleiche Verschlüsselungsalgorithmus oder für jede Darstellungsweise der Codierung ein separater Algorithmus gewählt werden.

An Stelle der individualisierenden Daten des Wertdokuments selbst können selbstverständlich auch andere Korrelationskriterien gewählt werden.

Auch ist es nicht notwendig, die magnetische Codierung in einem Magnetstreifen, wie in Fig. 2 dargestellt, zu speichern. Sie kann ebenso gut in einem Aufdruck, der mit Hilfe magnetischer Druckfarben auf dem Wertdokument erzeugt wurde, bestehen.

Bei der Echtheitsüberprüfung des Wertdokuments wird mit Hilfe eines Detektors quasi gleichzeitig die Codierung 5 abgetastet und das Emissionssignal des Untergrundstreifens 4 gemessen. In den Bereichen der Codierung 5 bzw. der Abdeckung weist das Emissionssignal Minima auf. Weist diese Signalkurve an einer Stelle ein Minimum auf, an welcher der Detektor kein korrespondierendes Codierungszeichen feststellt, so ist klar, daß die Codierung manipuliert wurde.

Ergibt die Überprüfung des Streifens 4, daß die Codierung nicht manipuliert wurde, so wird die in der Codierung 5 enthaltene Information mit der im Magnetstreifen 6 gespeicherten Information verglichen und auf Korrespondenz geprüft. Ergeben sich bei diesem Vergleich Diskrepanzen, so wurde an der Magnetcodierung manipuliert.

## Patentansprüche

1. Wertdokument (1), wie Scheck oder Ausweiskarte oder dergleichen, mit Informationen (3), die für das Dokument spezifisch sind, insbesondere benutzerbezogenen Daten, **dadurch gekennzeichnet, daß** das Dokument zumindest einen lumineszierenden Bereich (4) aufweist, der partiell so abgedeckt ist, daß eine Codierung (5) entsteht, die maschinell lesbar und zumindest mit Teilen der spezifischen Information (3) korreliert ist, um eine Echtheitsüberprüfung zu ermöglichen.

2. Wertdokument nach Anspruch 1, **dadurch gekennzeichnet, daß** der lumineszierende Bereich (4) in Form eines Streifens vorgesehen ist.

3. Wertdokument nach Anspruch 1 oder 2, **dadurch gekennzeichnet, daß** der lumineszierende Bereich (4) einen im unsichtbaren Spektralbereich lumineszierenden Stoff aufweist.

4. Wertdokument nach Anspruch 3, **dadurch gekennzeichnet, daß** der lumineszierende Bereich (4) zusätzlich einen im visuellen Spektralbereich fluoreszierenden Stoff aufweist.

5. Wertdokument nach wenigstens einem der Ansprüche 1 bis 4, **dadurch gekennzeichnet, daß** der lumineszierende Bereich (4) mit einem Lumineszenzstoff versehen ist, der in Form kleiner, visuell noch erkennbarer Strukturen aufgebracht ist.

6. Wertdokument nach wenigstens einem der Ansprüche 1 bis 5, **dadurch gekennzeichnet, daß** die Codierung (5) im visuellen Spektralbereich absorbiert.

7. Wertdokument nach wenigstens einem der Ansprüche 1 bis 6, **dadurch gekennzeichnet, daß** die Codierung (5) in Form von Streifen oder anderen geometrischen Strukturen, die in voneinander beabstandeten Bereichen angeordnet sind, aufgebracht ist.

8. Wertdokument nach wenigstens einem der Ansprüche 1 bis 7, **dadurch gekennzeichnet, daß** das Wertdokument (1) eine magnetische Information aufweist, die mit der Codierung (5) korreliert ist.

9. Wertdokument nach Anspruch 8, **dadurch gekennzeichnet, daß** die magnetische Information in einem Magnetstreifen (6) gespeichert ist oder in Form eines magnetischen Aufdrucks vorliegt.

10. Verfahren zur Herstellung eines Dokuments (1), wie Scheck, Ausweiskarte oder dergleichen, mit Informationen (3), die für das Dokument spezifisch sind, insbesondere benutzerbezogene Daten, **dadurch gekennzeichnet, daß** das Dokument mit einem lumineszierenden Bereich (4) versehen wird, der partiell so abgedeckt wird, daß eine Codierung (5) entsteht, die maschinell lesbar und zumindest mit Teilen der spezifischen Information (3) korreliert ist, um eine Echtheitsüberprüfung zu ermöglichen.

11. Verfahren nach Anspruch 10, **dadurch gekennzeichnet, daß** Dokumentenmaterial, vorzugsweise Papier, bereitgestellt wird, welches in mindestens einem vorbestimmten Bereich (4) mit einem Lumineszenzstoff versehen wird, und daß der Lumineszenzstoff anschließend partiell mit einem Stoff abgedeckt wird, der zumindest im Spektralbereich der Lumineszenzstrahlung absorbiert.

12. Verfahren nach Anspruch 10 oder 11, **dadurch gekennzeichnet, daß** die Abdeckung (5) in Form von Streifen oder anderen voneinander beabstandeten, geometrischen Strukturen erfolgt.

13. Verfahren nach wenigstens einem der Ansprüche 10 bis 12, **dadurch gekennzeichnet, daß** die Codierung (5) durch die Abstände und/oder die flächige Ausdehnung der geometrischen Figuren definiert wird.

14. Verfahren nach wenigstens einem der Ansprüche 10 bis 13, **dadurch gekennzeichnet, daß** die Abdeckung (5) mittels eines Laserdruckers, Nadeldrukkers oder einer Offset-Druckmaschine aufgebracht wird.

15. Verfahren zur Echtheitsprüfung eines Wertdokuments (1) nach einem der Ansprüche 1 bis 9, **dadurch gekennzeichnet, daß** das Wertdokument (1) dokumentenspezifische Informationen (3) und zumindest einen lumineszierenden Bereich (4) aufweist, wobei der Bereich (4) partiell so abgedeckt ist, daß eine zumindest mit Teilen der dokumentenspezifischen Informationen (3) korrelierende, maschinenlesbare Codierung (5) entsteht, umfassend die folgenden Schritte:
- Detektieren der abgedeckten Bereiche, um ein erstes Signal zu erhalten,
- Anregen und Detektieren der Emissionsstrahlung des lumineszierenden Untergrunds, um ein zweites Signal zu erhalten,
- Vergleich des ersten und des zweiten Signals, um Manipulationen an der Codierung (5) zu erkennen, und
- falls der Vergleich keine Manipulationen erkennen läßt, Vergleich der in der Codierung (5) enthaltenen Informationen mit den dokumentenspezifischen Informationen (3) des Wertdokuments (1).

16. Verfahren nach Anspruch 15, **dadurch gekennzeichnet, daß** beim Schritt des Vergleichens der in der Codierung (5) enthaltenen Informationen mit den dokumentenspezifischen Informationen (3) des Wertdokuments (1) auf in einem Magnetstreifen (6) gespeicherte dokumentenspezifische Informationen zurückgegriffen wird.

## Claims

1. A document of value (1), such as a check or ID card or the like, having information (3) specific to the document, in particular user-related data, **characterized in that** the document has at least one luminescent area (4) partially masked so as to yield a coding (5) that is machine-readable and correlated at least with parts of the specific information (3) in order to permit authenticity testing.

2. The document of value of claim 1, **characterized in that** the luminescent area (4) is provided in the form of a stripe.

3. The document of value of claim 1 or 2, **characterized in that** the luminescent area (4) has a substance that luminesces in the inyisible spectral region.

4. The document of value of claim 3, **characterized in that** the luminescent area (4) additionally has a substance that fluoresces in the visible spectral region.

5. The document of value of at least one of claims 1 to 4, **characterized in that** the luminescent area (4) is provided with a luminescent substance applied in the form of small yet visually recognizable structures.

6. The document of value of at least one of claims 1 to 5, **characterized in that** the coding (5) absorbs in the visible spectral region.

7. The document of value of at least one of claims 1 to 6, **characterized in that** the coding (5) is applied in the form of stripes or other geometrical configurations which are disposed in spaced apart areas.

8. The document of value of at least one of claims 1 to 7, **characterized in that** the document of value (1) has magnetic information that is correlated with the coding (5).

9. The document of value of claim 8, **characterized in that** the magnetic information is stored in a magnetic stripe (6) or present in the form of a magnetic print.

10. A method for producing a document (1), such as a check, ID card or the like, having information (3) specific to the document, in particular user-related data, **characterized in that** the document is provided with a luminescent area (4) that is partially masked so as to yield a coding (5) that is machine-readable and correlated at least with parts of the specific information (3) in order to permit authenticity testing.

11. The method of claim 10, **characterized in that** document material, preferably paper, is made available that is provided with a luminescent substance in at least one predetermined area (4), and the luminescent substance is then masked partially with a substance that absorbs at least in the spectral region of the luminescent radiation.

12. The method of claim 10 or 11, **characterized in that** the masking (5) is effected in the form of stripes or other spaced apart geometrical configurations.

13. The method of at least one of claims 10 to 12, **characterized in that** the coding (5) is defined by the spacing and/or superficial extent of the geometrical configurations.

14. The method of at least one of claims 10 to 13, **characterized in that** the mask (5) is applied by a laser printer, matrix printer or offset printing machine.

15. A method for testing the authenticity of the document of value (1) of any of claims 1 to 9, **characterized in that** the document of value (1) has document-specific information (3) and at least one luminescent area (4), the area (4) being partially masked so as to yield a machine-readable coding (5) correlating at least with parts of the document-specific information (3), comprising the following steps:
- detecting the masked area to obtain a first signal;
- exciting and detecting the emission radiation of the luminescent background to obtain a second signal;
- comparing the first and second signals to recognize manipulation of the coding (5), and
- if the comparison indicates no manipulation, comparing the information contained in the coding (5) with the document-specific information (3) of the document of value.(1).

16. The method of claim 15, **characterized in that** in the step of comparing the information contained in the coding (5) with the document-specific information (3) of the document of value (1) use is made of document-specific information stored in a magnetic stripe (6).

## Revendications

1. Document de valeur (1) tel qu'un chèque ou une carte d'identité ou similaires comportant des informations (3) spécifiques du document, notamment des données concernant l'utilisateur, **caractérisé en ce que** le document présente au moins une zone luminescente (4), qui est partiellement recouverte de telle sorte qu'on obtient un codage (5) lisible par une machine et corrélé au moins avec une partie des informations (3) spécifiques pour permettre une vérification d'authenticité.

2. Document de valeur selon la revendication 1, **caractérisé en ce que** la zone luminescente (4) est prévue sous la forme d'une bande.

3. Document de valeur selon la revendication I ou 2, **caractérisé en ce que** la zone luminescente (4) présente une substance luminescente dans la région spectrale invisible.

4. Document de valeur selon la revendication 3, **caractérisé en ce que** la zone luminescente (4) présente également une substance fluorescente dans la région spectrale visible.

5. Document de valeur selon au moins l'une quelconque des revendications 1 à 4, **caractérisé en ce que** la zone luminescente (4) est pourvue d'une substance luminescente appliquée sous la forme de petites structures visuellement encore identifiables.

6. Document de valeur selon au moins l'une des revendications 1 à 5, **caractérisé en ce que** le codage (5) absorbe dans la région spectrale visible.

7. Document de valeur selon au moins l'une quelconque des revendications 1 à 6, **caractérisé en ce que** le codage (5) est appliqué sous la forme de bandes ou d'autres structures géométriques, qui sont disposées dans des zones espacées les unes de autres.

8. Document de valeur selon au moins l'une quelconque des revendications 1 à 7, **caractérisé en ce que** le document de valeur (1) présente une information magnétique corrélée avec le codage (5).

9. Document de valeur selon la revendication 8, **caractérisé en ce que** l'information magnétique est stockée dans une bande magnétique (6) et se présente sous la forme d'une impression magnétique.

10. Procédé pour la fabrication d'un document de valeur (1) tel qu'un chèque ou une carte d'identité ou similaires comportant des informations (3) spécifiques du document, notamment des données concernant l'utilisateur, **caractérisé en ce que** le document est fourni avec au moins une zone luminescente (4), qui est partiellement recouverte de telle sorte qu'on obtient un codage (5) lisible par une machine et corrélé du moins avec une partie des informations (3) spécifiques pour permettre une vérification d'authenticité.

11. Procédé selon la revendication 10, **caractérisé en ce qu'**un matériau de document, de préférence du papier, est disponible qui, du moins dans une zone prédéterminée (4), est pourvu d'une substance luminescente, et **en ce que** la substance luminescente est ensuite recouverte partiellement par une substance qui absorbe au moins dans la région spectrale du rayonnement luminescent.

12. Procédé selon la revendication 10 ou 11, **caractérisé en ce que** la couverture (5) est réalisée sous la forme de bandes ou. d'autres structures géométriques espacées les unes des autres.

13. Procédé selon au moins l'une quelconque des revendications 10 à 12, **caractérisé en ce que** le codage (5) est défini par les distances et/ou l'extension plane des figures géométriques.

14. Procédé selon au moins l'une quelconque des revendication 10 à 13, **caractérisé en ce que** la couverture (5) est appliquée à l'aide d'une imprimante laser, d'une imprimante à aiguilles ou d'une imprimante offset.

15. Procédé de vérification de l'authenticité d'un document de valeur (1) selon l'une quelconque des revendications 1 à 9, **caractérisé en ce que** le document de valeur (1) présente des informations (3) spécifiques au document et au moins une zone luminescente (4), la zone (4) étant partiellement recouverte de telle sorte qu'on obtient un codage (5) pouvant être lu par une machine et corrélant avec au moins une partie des informations (3) spécifiques du document, comprenant les étapes suivantes :
- détection des zones recouvertes pour obtenir un premier signal,
- excitation et détection du rayonnement d'émission du fond luminescent pour obtenir un deuxième signal,
- comparaison des premier et deuxième signaux pour identifier des manipulations au niveau du codage (5), et
- si la comparaison ne montre pas de manipulations, comparaison des informations contenues dans le codage (5) avec les informations (3) spécifiques du document de valeur (1).

16. Procédé selon la revendication 15, caractérisé en ce dans l'étape de comparaison des informations contenues dans le codage (5) avec les informations (3) spécifiques du document de valeur (1), on utilise des informations spécifiques du document stockées dans une bande magnétique (6).
